# EUROPEAN PATENT SPECIFICATION

(11) **EP 3 730 691 B1**
(45) Date of publication and mention of the grant of the patent: **31.07.2024**
(21) Application number: 18847144.5
(22) Date of filing: 07.12.2018
(51) Int. Cl.: D21H 19/20, D21H 19/24, D21H 19/34, D21H 19/44, D21H 19/52, D21H 19/56, D21H 19/62, D21H 21/52, D06N 3/00

(54) **FLEXIBLE MATERIAL, ITS PRODUCTION METHOD AND USES**
FLEXIBLES MATERIAL, SEINE HERSTELLUNGSMETHODE UND VERWENDUNGEN
MATIÈRE SOUPLE, PROCÉDÉ D'OBTENTION ET SES UTILISATIONS

(30) Priority: 07.12.2017 PT 2017110448
(43) Date of publication of application: 28.10.2020
(73) Proprietor: Tintex - Textiles, S.A., 4920-009 Campos V.N. de Cerveira (PT)
(72) Inventor: DE ALMEIDA MORGADO, José, 4760-034 Vila Nova De Famalicão (PT); DO ROSÁRIO SILVA ROLEIRA MARINHO, Maria Augusta, 4760-034 Vila Nova De Famalicão (PT); PEREIRA VILAÇA, Maria Helena, 4760-034 Vila Nova De Famalicão (PT); REIS PEREIRA, Jéssica Alexandra, 4760-034 Vila Nova De Famalicão (PT); SILVESTRE MENDES PINTO DE MOURA, Bruna Gabriela, 4760-034 Vila Nova de Famalicão (PT); DA SILVA SAMPAIO E PORTELA, Ana Rute, 4760-034 Vila Nova de Famalicão (PT); PEREIRA DA COSTA AGUILAR RIBEIRO, Helena Isabel, 4760-034 Vila Nova de Famalicão (PT); TORRES MALGUEIRO, Regina Andreia, 4760-034 Vila Nova de Famalicão (PT); DO CARMO CRISPIM RIBEIRO, Luís Filipe, 4465-261 Matosinhos (PT); COELHO TRINDADE, Joana Maria, 4460-351 Sra. da Hora Matosinhos (PT); DA SILVA TAVARES, Ana Sofia, 4450-754 Leça da Palmeira (PT); OLIVEIRA MARTINS DA SILVA, Ricardo Jorge, 4740-224 Esposende (PT); PIRES MARTINS DA SILVA, Mário Jorge, 4740-206 Esposende (PT); REGADAS PINTO DE SÁ, Vera Lucia, 4535-334 Paços de Brandão (PT); COUTOS DOS SANTOS VENTURA, Sandra Gabriela, 4801-914 Guimarães (PT); SILVA ABREU, João, 4801-914 Guimarães (PT); ANTUNES SALGUEIRO GAIÃO, Joaquim Manuel, 2495-653 Fátima (PT); FERREIRA BRANCO MOURÃO, Raquel Rosa, 2330-160 Entroncamento (PT); MARTINS CARDOSO DE MAGALHÃES, Pedro José, 4900-215 Viana do Castelo (PT)
(74) Representative: Patentree
(86) International application number: PCT/IB2018/059782
(87) International publication number: WO 2019/111230

(56) References cited:
- CN-A- 103 966 922
- CN-A- 105 220 283
- JP-A- H09 170 173
- DATABASE WPI Week 201673, 2016 Derwent World Patents Index; AN 2016-649538, XP002790608

## Description

### Technical Domain

The present disclosure relates to a flexible material which imitates leather, more in particular a textile material, coated with products of vegetable origin.

### Background

The current market supply is devoid of textile substrates incorporating residue and by-products of vegetable origin.

There are some textiles on the market obtained based on the recovery of residue, in order to put into practice the new paradigm of the circular economy, through recycling of materials. In particular:
- NEWLIFE^{™} - Recycled polyester yarn, obtained through plastic bottles, processed to obtain a polymer, through a mechanical, non-chemical, and spinning process.
- H&M - The company has created some collections, such as *Close the Loop,* by recycling of textile materials obtained by the collection of used clothing.

It has been found that the main applications of these products are manufacture of everyday, technical or protective clothing.

As for the solutions available on the market, the state of the art focuses on traditional leather obtained from animal skin, which also includes fish hide leather, and materials alternative to leather, made from synthetic or natural products, which are commonly referred to as eco-leather and vegetable hide (Vegan). There are some solutions on the market made from these last materials alternative to leather of animal origin, although these do not reproduce in full the characteristics thereof. From the solutions of materials referenced as vegetal leather existing on the market, a few examples are listed: "leather" of latex base extracted from the rubber tree (*hevea brasiliensis*) from Amazonian forests; pineapple leaf "leather" Piñatex^{™} from the company Ananas Anam, based on a non-woven fabric made from pineapple leaf fibers; "leather" resulting from the fermentation of bacterial cultures, which form a film called SCOBY; "leather" based on thin sheets of cork laminated with a textile substrate, produced for example by the companies Sedacor and Corticeira Amorim; wood-based "leather" from fast-growing trees, such as for example oak bark; paper-based "leather", such as for example washi paper, obtained from the bark of the Japanese Kozo tree bark, and already used by Bottega Veneta; "leather" obtained from different species of mushrooms, e.g. MuSkin, MycoLeather, MycoTex, TextileBio, etc .; "leather" based on grape marc designated Vegea^{®}; "leather" based on banana tree fiber, for example produced by Green Banana Paper; "leather" based on slate stone designated Coolstone 'Leather'; apple-based "leather" by Happy Genie, VEERAH, Frumat, etc.; and "leather" based on Teak or other leaves (Elpis Studio, Tree Tribe, Nuvi Nomad, Thamon).

KR1 0166501 0B1 discloses a textile cover fabric coated with a layer comprising 20 wt% of acrylic based resin binder and 40 wt% of hemp powder obtained by pulverizing hemp leaves, roots and stems. The powder grain size is about 300 micrometers, with 20 wt% passing through a 100 mesh sieve.

These facts are described in order to illustrate the technical problem solved by the embodiments of the present document.

The invention is defined in claims 1-17.

### General Description

The material described in the present disclosure comprises a textile substrate, namely a woven, knitted or non-woven fabric, coated using residue and by-products of different origins, method for obtaining and uses thereof. The residues and by-products used are waste of vegetable origin, generated during the productive or agroforestry process.

The textile substrate, woven, knitted or non-woven fabric, described in the present disclosure is useful for the textile and confectionery industry, and can be applied extensively in the textile industry, namely in the manufacture of clothing or for application in furniture and upholstery, home textiles and decoration, footwear, automobile upholstery, bags, wallets, belts, leather goods, etc.

Thus, the typology of vegetable residue and by-products valued in this sense is limited, as is the process of transformation and application thereof.

Within the scope of the present disclosure, coated textile means any material consisting of a textile substrate which has a film of a polymer material applied onto its surface and which can be used for the production of everyday clothing, technical or protective clothing, application in furniture and upholstery, home textiles and decoration, footwear, vehicle upholstery, bags, leather goods (wallets, belts, etc.), etc.

In this way, the present disclosure solves the following problems:
- Inexistence of textile substrates, in particular woven, knitted or non-woven fabrics, incorporating residue and by-products by coating the textile substrate;
- Inexistence of textile substrates incorporating vegetable residues and by-products of varied typology, generated during the productive or agroforestry process;
- Aesthetic and functional valorization by the coating of knitted, woven and non-woven fabrics with polymers added with vegetal residues.

The present disclosure introduces an innovative concept as regards textile materials, in particular woven, knitted or non-woven fabrics, since it distinguishes itself from products currently existing on the market which are obtained by exploiting raw material which has previously been submitted to a productive process. The now-disclosed residue-coated woven, knitted or non-woven fabrics incorporate a high amount of residue. The present material contributes to the application of the principles of circular economy by applying the valorization of residues and by-products from different agroforestry industries, making it a unique and differentiating product in relation to the state of the art.

The flexible material described in the present disclosure presents flexibility and malleability close to leather with similar characteristics in terms of thickness and softness. The described material also exhibits acceptable friction fastness, light, abrasion resistance, water droplet, and coating adhesion values according to the main specifications for which the product is intended.

Within the scope of the present disclosure, woven, knitted or non-woven fabrics coated with vegetable residue and by-product microparticles/granulates obtained from different origins are developed by coating processes. The present disclosure relates to textile substrates consisting of all textile fibers and combinations thereof, which may be of natural or non-natural origin, said textile substrates comprising vegetable residue and by-product microparticles of different typologies, wherein they bind to the textile by means of a binder.

One aspect of the present disclosure relates to a flexible material comprised by coated textile comprising woven, knitted or non-woven fabrics, (of natural or non-natural fiber, e.g. synthetic, regenerated cellulosics) and a coating film on at least one of its surfaces, with a thickness comprised between 0.05 - 3 mm, wherein at least 5% of the mass of said coating consists of residue particles (wt residue/wt coating) and a synthetic or natural polymer binder for binding the residue particles to the textile substrate wherein the residue particles have a particle size of less than 1 mm.

The present invention relates to a flexible material as claimed in claim 1.

In the present disclosure % (w/w) relate to weight/weight percentages.

In one embodiment, preferably at least 7% of residue particles (wt residue/wt coating) more preferably at least 10% of residue particles (wt residue / wt coating).

In one embodiment, the weight of the coated textile is the weight of the textile substrate (consisting of natural or non-natural fiber, e.g. synthetic, regenerated cellulosic) with the different coating layers, which may be applied as a paste or foam, that is, weight of the textile substrate, weight of the residue particles, weight of the natural or synthetic binder and other additives.

In one embodiment, the flexible material of the present disclosure can be produced so as to provide elastic, pliable, flexible and lightweight, water vapor permeable (breathability) textiles, which are tensile, abrasion, rip, flexure, tear, elongation, tear after flexure, friction, light, hydrolysis resistant, these characteristics being maintained after several washing cycles. These textiles are especially suitable for clothing, application in furniture, automobile upholstery, home textiles and decoration, footwear, bags, wallets, belts and other technical solutions due to the mechanical properties of the new textile material.

The coating layer comprises between 5% - 50% residue particles (wt residue/ wt coating), preferably microparticles, in particular 8-10% residue particles (wt residue/ wt coating).

The residue particles comprise a particle size of less than 0.7 mm; preferably 0.001 - 0.7 mm, more preferably 0.05 - 0.5 mm.

In one embodiment for best results, the residue particles may comprise a particle size of between 0.1 - 0.3 mm.

In one embodiment for best results, 50% of the particles may comprise a particle size of less than 0.5 mm.

In one embodiment for best results, 70% of the particles may comprise a particle size of less than 0.7 mm.

In one embodiment for best results, 90% of the particles may comprise a particle size of less than 0.8 mm.

In one embodiment for best results, the polymer binder may be selected from the following list: polyurethane, polyester, polyether, polyacrylate, polycarbonate, polyvinylchloride, polyvinyl acetate, acrylic polyester, polystyrene, polyethylene, polyamide, waxes, paraffins, silicones, or combinations thereof. Preferably, polyurethane, polyacrylate, polycarbonate or combinations thereof.

In one embodiment for best results, the coating layer may further comprise a crosslinker, thickener, softener, stabilizer, colorant, pigment, dispersant, anti-foamer, foamer, expander, emulsifier, anti-UV agent or combinations thereof.

The residues are selected from the following list: saw dust, leaf and stem residues, mushroom residues, paper residues, cereal residues, tea plant residues, coffee residues, rice husk, nut residues (in particular walnut, almond, chestnut, cashew, pine nut), tree bark (in particular pine and eucalyptus), olive stones, or mixtures thereof. These residues have very good results since they support the temperature of textile processing.

In one embodiment for best results, the combination of polymer binder and residue is selected from the following list:
coffee residues, aliphatic polyester-polyurethane;
coffee residues, aliphatic polyether-polycarbonate urethane;
saw dust, aliphatic polyester-polyurethane;
saw dust, aliphatic polyether-polycarbonate urethane;
rice husk, aliphatic polyester-polyurethane;
pine bark, aliphatic polyacrylate-polyurethane;
pine bark; polyester-polyurethane;
or combinations thereof.

In one embodiment for best results, the textile substrate or the cellulose-based substrate may comprise fibers selected from a list consisting of: cotton, linen, wool, regenerated cellulosics (such as: viscose, lyocell, seacell, tencel, etc.), polyester, elastane, or combinations thereof.

In one embodiment for best results, a coated textile is considered to consist of a textile substrate whose surface is covered by a film of a coating material, the thickness of which should be comprised between 0.05 - 3 mm, in particular 0.1 - 1.5 mm; 0.2 - 0.6 mm; 0.3 - 0.5 mm.

In one embodiment for best results, the material is obtained by a thermosetting or UV setting, or combinations thereof.

In one embodiment for best results, the material of the present embodiment may further be subjected to a surface treatment, namely a lacquer layer, etching, decorative effects, among others.

In one embodiment for best results, the material comprises at least one additional layer, namely a lacquer layer, varnish layer, among others.

In one embodiment for best results, the coating layer is obtainable by knife coating or rotary screen. That is, by placing the coating composition of the textile or cellulose-based substrate described in the present disclosure, under the textile or cellulose-based substrate by knife coating or rotary screen.

For obtaining best results, the disclosed textile or cellulose-based substrate is coated with a paste, foam, or coating solution which comprises from 50 to 90% (wt binder/ wt coating) of a natural or synthetic polymer binder, or in combination, selected from the following list: polyurethane, polyester, polyether, polyacrylate, polycarbonate, polyvinyl chloride, polyvinyl acetate, acrylic polyester, polystyrene, polyethylene, polyamide, waxes, paraffins, silicones, polymers of natural origin (lignosulfonate from eucalyptus, residues from paste production by sulphite process), or mixtures thereof.

In one embodiment for best results, crosslinkers, thickeners, softeners, stabilizers, expanders (3D relief), organic and inorganic, ordinary, metallic, iridescent, glitter, glitters, phosphorescent, fluorescent, photo or thermochromic pigments, synthetic or natural dyes, etc. may also be used.

In one embodiment for best results, the incorporation of a percentage of residue particles onto the textile substrates of 5 to 50% (wt residue/ wt coating) was achieved.

In one embodiment, the flexible material may be finished with thermosetting and/or UV setting varnishes or lacquers to improve the performance of the materials developed, namely resistance to scratching, abrasion, light, water, among others.

In one embodiment for best results, the polymer binder of synthetic, natural origin or a suitable combination thereof that binds the residue particles to the textile substrate may comprise polyurethane, polyester, polyether, polyacrylate, polycarbonate, polystyrene, polyethylene, polyamide, waxes, paraffin, silicones, and also natural binders (lignosulfonate from eucalyptus, residues from paste production by sulphite process), or a combination thereof, among others.

In one embodiment for best results, the coating paste formulated for application onto the textile herein disclosed may further comprise a crosslinker, thickener, softener, stabilizer, colorant, pigment, dispersant, anti-foamer, foamer, expander, emulsifier, anti-UV agent or combinations thereof.

In one embodiment for best results, the residues may be selected from the following list: saw dust, leaf and stem residues, mushroom residues, paper residues, cereal residues, tea plant residues, coffee residues, rice husk, nut residues, tree bark, olive stones, or mixtures thereof.

In one embodiment for best results, the textile substrate may be a woven, knitted or non-woven fabric comprised of any type of textile fiber selected from a list consisting of cotton, linen, wool, regenerated cellulosics (such as: viscose, lyocell, seacell, tencel, etc.), polyester, elastane, or combinations thereof, among others.

The invention further relates to a composition as claimed in claim 13.

The composition comprises 50% to 90% (wt binder/ wt paste) of a suitable polymer binder and 5% to 50% (wt residue/ wt paste) of residue particles, even more preferably from 80% to 90% (wt binder/ wt paste) of a suitable polymer binder and 8 to 10% (wt residue/ wt paste) of residue particles.

In one embodiment for best results, the residue particles comprise a particle size of less than 1 mm, preferably less than 0.7 mm, preferably a particle size between 0.001-0.7 mm, preferably 0.05 - 0.5 mm.

In one embodiment for best results, the composition is a paste or a foam.

The present disclosure also relates to a process for depositing the vegetable residue and by-product particles in the textile structure, woven, knitted or non-woven fabric, and which may comprise the following steps, namely deposition of a paste, foam or coating solution by knife coating or rotary screen, etc., in said textile structures.

The present invention also relates to articles incorporating the present material and/or composition. In particular, clothing, furniture, home textiles and decoration, footwear, automobile upholstery, bags, wallets, belts, leather goods, among others.

In one embodiment, the coated textiles described in the present disclosure demonstrated wash resistance greater than 20 cycles, in particular carried out at 40 °C.

Measurement of the coating/paste viscosity can be carried out in a number of ways, in this disclosure the viscosity measurement was carried out as measured on Brookfield DVEERVT equipment using a 100 mL glass beaker containing the coating paste up to its maximum capacity, with spindles s06 or s07, a rotation of 100 rpm, and a torque between 10 and 100%, in particular 16 and 52%, at 20 °C.

In one embodiment, the coated textiles described in the present disclosure have demonstrated abrasion resistance greater than 51,000 cycles, performed by the Martindale abrasion test, using a pressure of 90 kPa.

In one embodiment, the coated textiles described in the present disclosure have demonstrated malleability, flexibility, elasticity, low thickness, and have achieved seamability thereof by conventional and non-conventional processes.

The products developed and described in the present disclosure have several advantageous characteristics for application on the market, namely the following:
- Malleability, elasticity, flexibility, adhesion, seamability, possibility of being washed without deformations and changes in color and appearance, in particular up to 20 washes;
- Good performance in terms of tear strength and abrasion damage;
- Good dimensional stability when washing;
- Thickness suitable for use in textile articles;
- Can be easily sewn on conventional and non-conventional machines;
- Flexural strength;
- Adhesion of the finish;
- Friction strength;
- Extension strength;
- Rip strength;
- Tensile and elongation strength;
- Permeability to water vapor (breathability);
- Light fastness;
- Sweat fastness;
- Water drop resistance;
- Abrasion resistance.

In one embodiment, the use of the residue particles of different typologies rather than being limited to a specific type, as disclosed in the prior art, is also of a variability nature in terms of reuse and exploitation of residue and by-products of different industries and agroforestry. As a result, residue and by-products used as raw material may be more affordable and cost-effective, while promoting the eco-friendly and sustainability concept in different industries.

In one embodiment, the particle size of the residue used in the present disclosure may range from 0.001 - 1 mm, preferably 0.1 - 0.3 mm.

Measurement of the residue particle size / granulometry / granule can be performed in a number of ways, wherein in this disclosure the particle size / granulometry measurement was performed based on the standard of the granulometric analysis by mechanical sieving, namely that described by NP ISO 2030:2018 in particular with regard to the particle size obtained by sieves.

Measurement of the paste viscosity can be carried out in a number of ways, in this disclosure the viscosity measurement of the paste was carried out as measured on Brookfield DVEERVT equipment using a 100 mL glass beaker containing the coating paste up to its maximum capacity, the viscosity measurement being carried out with s06 or s07 spindles, a rotation of 100 rpm, and a torque between 10% and 100%, in particular 16% and 52%, at 20 °C.

The present disclosure allows obtaining a coated textile in which the characteristics of the textile substrate are maintained and at the same time it is possible to increase innovative characteristics of aesthetic and functional valorization, increase the resistance to tearing and elongation, abrasion, flexion, light, hydrolysis, the dimensional stability and also the resistance to thermal variations, among others.

The present disclosure relates to a woven, knitted or non-woven fabric consisting of natural or non-natural fiber (e.g., synthetic or regenerated cellulosics) comprising at least one coating layer with a thickness of at least 0.05 mm and with at least 5% residue particles in its composition (wt residue/wt coating) and a suitable polymer binder of synthetic, natural origin or a combination thereof, which binds the residue particles and by-products to the textile substrate, wherein the particles comprise a particle size less than 1 mm.

In one embodiment for best results, the coated textile now disclosed comprises at least 5% (wt residue/ wt coating) of residue particles in the coating composition, preferably at least 7% (wt residue/ wt coating) of residue particles, even more preferably at least 10% (wt residue/ wt coating) of residue particles.

The residue particles may have a particle size of less than 1 mm, preferably less than 0.7 mm.

In one embodiment for best results, said residue particles may further have a particle size between 0.001 - 0.7 mm, preferably between 0.05 - 0.5 mm.

In one embodiment, the process now disclosed may further comprise a drying and / or setting step, preferably a dry heat thermosetting or UV setting step.

Throughout the description and claims the word "comprises" and variations of the word, have no intention of excluding other technical features, such as other components, or steps. Additional objects, advantages and features of the disclosure will become apparent to those skilled in the art upon examination of the description or may be learned by practicing the disclosure. The following examples and figures are provided for illustrating purposes, and are not intended to be limiting of the present disclosure. In addition, the present disclosure encompasses all possible combinations of particular or preferred embodiments described herein.

### Brief Description of the Figures

For an easier understanding of the present disclosure, figures are herein attached, which represent preferred embodiments which however are not intended to limit the object of the present disclosure.
**Figure 1****:** Representation of the process for coating the textile substrate with the composition described in the present disclosure, wherein B, D and E represent different systems for applying the coating, B being the knife coating on roll coating technique, D the knife coating on air coating technique, and E the rotary screen coating technique.
**Figure 2****:** Representation of the process for coating the textile substrate with the composition described in the present disclosure by rotary screen.

Wherein:
(A) represents the textile substrate;
(B) represents the knife coating on roll;
(C) represents the coated textile substrate;
(D) represents the knife coating on air;
(E) represents the rotary screen/cylinder.

### Detail Description

The present disclosure relates to a flexible material which imitates leather, more in particular a textile material, coated with products of vegetable origin.

The present disclosure relates to a flexible material comprised of a coated, textile substrate, woven, knitted or non-woven fabric, the coating material of which has in its constitution vegetable residue and/or by-products, which may be of different typologies. In particular, the combination of textile or cellulosic substrates in combination with a coating layer incorporating residues with a certain particle size.

The flexible material of the present disclosure is useful for the textile and confectionery industry and can be extensively applied in the textile industry namely in the manufacture of textile materials for clothing or for application in furniture, home textiles and decoration, footwear, automobile upholstery, bags, wallets, belts, leather goods, etc.

The present disclosure is associated with the application of different technological processes that resort to superficial chemical deposition technologies, namely coating by reactive action. The solutions obtained by adopting the recommended research process are: fabric, non-woven and knitted structures, in particular of natural or unnatural origin, in particular synthetic or artificial origin, and coated with residue and by-product microparticles / granulates of different typologies, from waste from the productive process of different industries and agroforestry.

This is an innovative concept for textile materials obtained from the recycling of vegetable residue and by-products, suitable for simple mechanical processes, not involving chemical processes, in particular woven, non-woven and knitted fabrics, once unlike the products currently existing on the market these incorporate a greater amount of residue, that is, attached to the textile substrate making them unique and differentiating products in relation to the state of the art.

In one embodiment, the following methodology was adopted:
- preparation of a recipe of the residue microparticle/granulate coating paste that allows a strong interaction between residue and textile substrates;
- formulation of the coating pastes by resorting to resins, namely polyurethane, polyester, polyether, polyacrylate, polycarbonate, polyvinyl chloride, polyvinyl acetate, acrylic polyester, polystyrene, polyethylene, polyamide, waxes, paraffins and silicones, among others, and other additives, for example thickeners, stabilizers, foamers, among others;
- bonding between coating paste and textile substrates by means of knife coating or rotary screen coating technology which consists in the deposition of a polymer of synthetic or natural origin or a combination of both onto the textile structure to be processed.

In one embodiment, the coating paste, foam, or solution composition may comprise: residue particles, binder, crosslinker, and thickener.

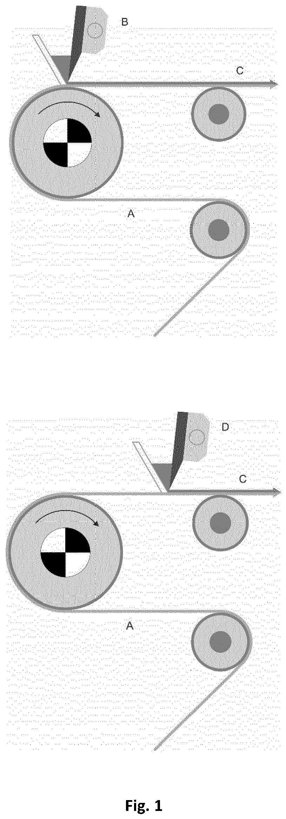

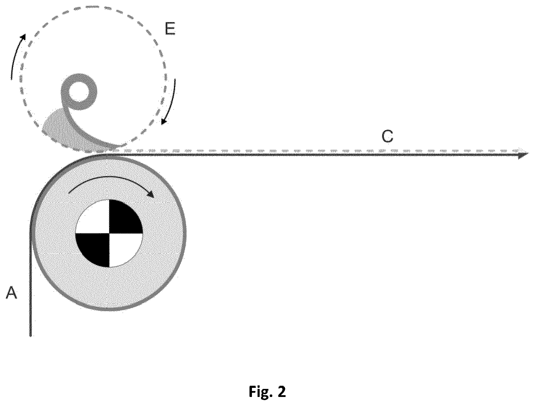

In one embodiment, the coating process of the woven, knitted and nonwoven fabric structures is carried out according to figure 1 and figure 2 wherein after preparation of the coating paste, foam or solution the later is deposited onto the surface by knife coating or rotary screen coating technology, etc. in a quantity necessary to obtain at the end a particle value of the chosen residue of more than 5% (wt residue/wt coating). The coated structure is then subjected to drying and thermosetting with dry heat (dryer/tentering machine) or UV setting for the time necessary for its effective attachment.

In one embodiment of the coating process, coating application is performed according to figure 1 and figure 2. The paste, foam or solution is then prepared which is then placed in front of the coating knife and/or into the rotary screen. The distance between the application system and the textile substrate is selected, or the pressure therebetween corresponding to the thickness of the coating film and which may be less than 3.0 mm. Subsequently, the textile substrate moves continuously, deposition of the coating paste occurring and a uniform coating film with a percentage of more than 5% of residue particles (wt residue/ wt coating) being obtained at the end.

In one embodiment, the processes for applying the coating paste, foam or solution onto the textile substrates, as well as their processing, temperature, pressure, time, speed parameters, among others, must also be suitably adjusted to guarantee the quality of the textile substrates incorporating residues. Processing conditions, both in terms of the application technology and in terms of parameters, are different for the different substrates, in particular woven, non-woven and knitted fabrics.

In one embodiment, if any constraints impeding the success of this solution are present, prior preparation processes will also be used through surface modification promoted by plasma, ozone, ultrasound, swelling with isopropanol or toluene, among others. These treatments help cleaning, activating and functionalizing the surface of the textile substrates, making it more apt to create the bond.

In one embodiment, in the case of woven, non-woven and knitted fabrics, a cold coating made by knife coating or rotary screen, etc. may be carried out and subsequent drying treatment at 100 °C and thermosetting at a preferred temperature between 120 °C and 160 °C or UV setting.

The products obtained incorporate a high amount of residues of different typologies in a reactive way, that is, bond by strong interactions to the textile substrate, making them unique and differentiating products in relation to the state of the art, allowing it to be a viable alternative to the solutions currently available in the market, traditional leather and imitations thereof.

Some examples of the present disclosure are given below. The processes for applying the paste or foam onto the textile substrates, as well as their processing, temperature, pressure, time, speed parameters, among others, must also be adjusted to guarantee the quality of the textile substrates.

In one embodiment, a coating paste containing 20% vegetable dry residue, such as for example coffee, with a particle size equal to or less than 0.2 mm, and 70% aliphatic polyester-polyurethane-based coating aqueous polymer paste was prepared, a polyurethane-based thickener being added until a viscosity of 43 dPa.s (spindle s06 and 44.0% torsion) was reached, which was foamed to a density of 350 g/L. After application of this foam on a 100% cotton jersey (0.39 mm thick), by knife coating on roll technology, drying at 100-120 °C, attachment at 150 °C, and pressing at 100 °C and 100 bar at a speed of 5 m/min, a flexible coating was obtained, with a final thickness of 0.3 mm. This coating presented a grade 5 fastness to Veslic friction (ISO 11640: 2012) when dry and a grade 1 when wet; Martindale abrasion fastness (ISO 17704: 2004) classification A after 51200 revolutions, with a color change grade 5; grade 1 fastness to Crockmeter friction (ISO 20433: 2012); light fastness (ISO 105-B02) grade 2/3; adhesion (ISO 11644: 2009) when wet of 2.2 and when dry of 11.7 N/cm; and water droplet fastness (ISO 15700: 1998) without significant swelling or staining after drying.

In one embodiment, a coating paste containing 10% vegetable dry residue, such as for example cereals, with a particle size equal to or less than 0.2 mm, and 80% aliphatic polyester-polyurethane-based coating aqueous polymer paste was prepared, a polyurethane-based thickener being added until a viscosity of 33 dPa.s (spindle s06 and 44.0% torsion) was reached, which was foamed until a density of 280 g/L was obtained. After application of this foam on a 100% cotton jersey (0.39 mm thick), by knife coating on roll technology, drying at 100-120 °C, attachment at 150 °C, and pressing at 100 °C and 100 bar at a speed of 5 m/min, a flexible coating was obtained, with a final thickness of 0.35 mm. This coating presented a grade 5 fastness to Veslic friction (ISO 11640: 2012) when dry and a grade 4/5 when wet; Martindale abrasion fastness (ISO 17704: 2004) classification A after 51200 revolutions, with a color change grade 5; grade 5 fastness to Crockmeter friction (ISO 20433: 2012); light fastness (ISO 105-B02) grade 2/3; adhesion (ISO 11644: 2009) when wet of 4.2 and when dry of 10 N/cm; and water droplet fastness (ISO 15700: 1998) without significant swelling or staining after drying.

In one embodiment, a coating paste containing 15% vegetable dry residue, such as for example cereals, with a particle size equal to or less than 0.2 mm, and 75% aliphatic polyester-polyurethane-based coating aqueous polymer paste was prepared, a polyurethane-based thickener being added until a viscosity of 25 dPa.s (spindle s06 and 44.0% torsion) was reached, which was foamed until a density of 290 g/L was obtained. After application of this foam on a 100% cotton jersey (0.39 mm thick), by knife coating on roll technology, drying at 100-120 °C, attachment at 150 °C, and pressing at 120 °C and 120 bar at a speed of 5 m/min, a flexible coating was obtained, with a final thickness of 0.36 mm. This coating presented a grade 5 fastness to Veslic friction (ISO 11640: 2012) when dry and a grade 3/4 when wet; Martindale abrasion fastness (ISO 17704: 2004) classification A after 51200 revolutions, with a color change grade 5; grade 5 fastness to Crockmeter friction (ISO 20433: 2012); light fastness (ISO 105-B02) grade 3/4; adhesion (ISO 11644: 2009) when wet of 2.5 and when dry of 12.1 N/cm; and water droplet fastness (ISO 15700: 1998) without significant swelling or staining after drying.

In one embodiment, a coating paste containing 20% vegetable dry residue, such as for example cereals, with a particle size equal to or less than 0.2 mm, and 70% aliphatic polyester-polyurethane-based coating aqueous polymer paste was prepared, a polyurethane-based thickener being added until a viscosity of 55 dPa.s (spindle s06 and 44.0% torsion) was reached, which was foamed until a density of 300 g/L was obtained. After application of this foam on a 100% cotton jersey (0.39 mm thick), by knife coating on roll technology, drying at 100-120 °C, attachment at 150 °C, and pressing at 100 °C and 100 bar at a speed of 5 m/min, a flexible coating was obtained, with a final thickness of 0.37 mm. This coating presented a grade 5 fastness to Veslic friction (ISO 11640: 2012) when dry and a grade 5 when wet; Martindale abrasion fastness (ISO 17704: 2004) classification A after 51200 revolutions, with a color change grade 5; grade 5 fastness to Crockmeter friction (ISO 20433: 2012); light fastness (ISO 105-B02) grade 2/3; adhesion (ISO 11644: 2009) when wet of 2.7 and when dry of 5.5 N/cm; and water droplet fastness (ISO 15700: 1998) with no swelling or staining after drying.

In one embodiment, a coating paste containing 25% vegetable dry residue, such as thyme, with a particle size equal to or less than 0.2 mm, and 70% polyacrylate-polyurethane-based coating aqueous polymer paste was prepared, a polyurethane-based thickener being added until a viscosity of 75 dPa.s (spindle s06 and 44.0% torsion) was reached, which was foamed until a density of 500 g/L was obtained. After application of this foam on a 100% cotton jersey (0.39 mm thick), by knife coating on roll technology, drying at 100-120 °C, attachment at 150 °C, and embossing at 180 °C and 2.5 bar at a speed of 1m/min, a flexible coating was obtained, with a final thickness of 1.05 mm.

In one embodiment, a coating paste containing 5.1% vegetable dry residue, such as for example pine saw dust, with a particle size equal to or less than 0.2 mm, and 89.4% aliphatic polyester-polyurethane and policarbonate-polyurethane based coating aqueous polymer paste was prepared, a polyurethane-based thickener being added until a viscosity of 75 dPa.s (spindle s06 and 44.0% torsion) was reached, which was foamed until a density of 600 g/L was obtained. After application of this foam on a 100% cotton jersey (0.39 mm thick), by knife coating on roll technology, drying at 100-120 °C, attachment at 150 °C, and embossing at 180 °C and 2.5 bar at a speed of 1m/min, a flexible coating was obtained, with a final thickness of 1.05 mm.

In one embodiment, a coating paste containing 9.1% dry coffee grounds, with a particle size equal to or less than 0.2 mm, and 90.9% aliphatic polyester-polyurethane-based coating aqueous polymer paste was prepared having a viscosity of 66 dPa.s (spindle s07 and 16.3% torsion). After application of this paste on a 100% cotton jersey (0.39 mm thick), by knife coating on roll technology, drying at 100 °C, attachment at 140 °C, and pressing at 140 °C and 6 bar for 30 s, a flexible coating was obtained, with a thickness of 0.17 mm. This coating presented a grade 5 fastness to Veslic friction (ISO 11640: 2012) when dry and a grade ≥ 4 when wet; Martindale abrasion fastness (ISO 17704: 2004) classification C after 51200 revolutions, with a color change grade 2; superior grade 4 fastness to Crockmeter friction (ISO 20433: 2012); light fastness (ISO 105-B02) grade 3-4; adhesion (ISO 11644: 2009) when wet of 8.9 and when dry of 16.2 N/cm; and water droplet fastness (ISO 15700: 1998) with no swelling or staining after drying.

In one embodiment, a coating paste containing 9.1% dry coffee grounds, with a particle size equal to or less than 0.2 mm, and 84.1% aliphatic polyester-polyurethane-based coating aqueous polymer paste containing about 50% recycled content, and 6,8% of a blocked aliphatic poliisocyanate fastener was prepared, a polyurethane-based thickener being added until a viscosity of 51.7 dPa.s (spindle s06 and 51.7% torsion) was reached. After application of this paste on a 100% cotton jersey (0.39 mm thick), by knife coating on roll technology, drying at 100 °C, attachment at 120 °C, and pressing at 120 °C and 6 bar for 30 s, a flexible coating was obtained, with a thickness of 0.16 mm. This coating presented a grade 5 fastness to Veslic friction (ISO 11640: 2012) when dry and when wet; Martindale abrasion fastness (ISO 17704: 2004) classification B after 51200 revolutions, with a color change grade 4/5; grade 5 fastness to Crockmeter friction (ISO 20433: 2012); light fastness (ISO 105-B02) grade 3/4; adhesion (ISO 11644: 2009) when wet of 17.2 and when dry of 30.0 N/cm; and water droplet fastness (ISO 15700: 1998) with no swelling or staining after drying and only a slight swelling before drying.

In one embodiment, a coating paste containing 9.1% dry coffee grounds, with a particle size equal to or less than 0.2 mm, and 90.9% aliphatic polyether-polycarbonate urethane-based coating aqueous polymer paste was prepared having a viscosity of 52.8 dPa.s (spindle s07 and 13.2% torsion). After application of this paste on a 100% cotton jersey (0.39 mm thick), by knife coating on roll technology, drying at 100 °C, attachment at 140 °C, and pressing at 140 °C and 6 bar for 30 s, a flexible coating was obtained, with a thickness of 0.17 mm. This coating presented a grade ≥4 fastness to Veslic friction (ISO 11640: 2012) when dry and when wet; Martindale abrasion fastness (ISO 17704: 2004) classification C after 51200 revolutions, with a color change grade 2; grade 3 fastness to Crockmeter friction (ISO 20433: 2012) when wet and grade 5 when dry; light fastness (ISO 105-B02) grade 3; adhesion (ISO 11644: 2009) when wet of 8.2 and when dry of 15.6 N/cm; and water droplet fastness (ISO 15700: 1998) with no swelling or staining after drying.

In one embodiment, a coating paste containing 9.1% dry pine saw dust, with a particle size equal to or less than 0.2 mm, and 90.1% aliphatic polyester-polyurethane-based coating aqueous polymer paste was prepared, a polyurethane-based thickener being added until a viscosity of 43.5 dPa.s (spindle s06 and 44.0% torsion) was reached. After application of this paste on a 100% cotton jersey (0.39 mm thick), by knife coating on roll technology, drying at 100 °C, attachment at 140 °C, and pressing at 140 °C and 6 bar for 30 s, a flexible coating was obtained, with a thickness of 0.17 mm. This coating presented a grade 5 fastness to Veslic friction (ISO 11640: 2012) when dry and a grade ≥4 when wet; Martindale abrasion fastness (ISO 17704: 2004) classification B after 51200 revolutions, with a color change grade 4; grade 5 fastness to Crockmeter friction (ISO 20433: 2012); light fastness (ISO 105-B02) grade 2; adhesion (ISO 11644: 2009) when wet of 12.5 and when dry of 20.3 N/cm; and water droplet fastness (ISO 15700: 1998) with no swelling or staining after drying and only a slight swelling before drying.

In one embodiment, a coating paste containing 9.1% dry pine saw dust, with a particle size equal to or less than 0.2 mm, 84.1% aliphatic polyester-polyurethane-based coating aqueous polymer paste containing about 50% recycled content, and 6,8% of a blocked aliphatic poliisocyanate fastener was prepared, a polyurethane-based thickener being added until a viscosity of 95 dPa.s (spindle s07 and 24.0% torsion) was reached. After application of this paste on a 100% cotton jersey (0.39 mm thick), by knife coating on roll technology, drying at 100 °C, attachment at 120 °C, and pressing at 120 °C and 6 bar for 30 s, a flexible coating was obtained, with a thickness of 0.16 mm. This coating presented a grade 5 fastness to Veslic friction (ISO 11640: 2012) when dry and when wet; Martindale abrasion fastness (ISO 17704: 2004) classification C after 51200 revolutions, with a color change grade 4; grade 5 fastness to Crockmeter friction (ISO 20433: 2012); light fastness (ISO 105-B02) grade 3; adhesion (ISO 11644: 2009) when wet of 25.2 and when dry of 31.2 N/cm; and water droplet fastness (ISO 15700: 1998) with no swelling or staining after drying and only a slight swelling before drying.

In one embodiment, a coating paste containing 9.1% dry pine saw dust, with a particle size equal to or less than 0.2 mm, and 90.1% aliphatic polyether-polycarbonate urethane-based coating aqueous polymer paste was prepared, a polyurethane-based thickener being added until a viscosity of 100 dPa.s (spindle s07 and 39.0% torsion) was reached. After application of this paste on a 100% cotton jersey (0.39 mm thick), by knife coating on roll technology, drying at 100 °C, attachment at 140 °C, and pressing at 140 °C and 6 bar for 30 s, a flexible coating was obtained, with a thickness of 0.17 mm. This coating presented a grade 5 fastness to Veslic friction (ISO 11640: 2012) when dry and grade ≥4 when wet; Martindale abrasion fastness (ISO 17704: 2004) classification C after 51200 revolutions, with a color change grade 3; grade 5 fastness to Crockmeter friction (ISO 20433: 2012); light fastness (ISO 105-B02) grade 3-4; adhesion (ISO 11644: 2009) when wet of 8.1 and when dry of 15.2 N/cm; and water droplet fastness (ISO 15700: 1998) with no swelling or staining after drying and only a slight swelling before drying.

In one embodiment, a coating paste containing 9.1% dry coffee grounds, with a particle size equal to or less than 0.2 mm, 85.9% aliphatic polyester-polyurethane-based coating aqueous polymer paste and 5% of a natural lignosulfonate-based binder was prepared, a polyurethane-based thickener being added until a viscosity of 100 dPa.s (spindle s07 and 50.0% torsion) was reached. After application of this paste on a 100% cotton jersey (0.39 mm thick), by knife coating on roll technology, drying at 100 °C, attachment at 150 °C, and pressing at 150 °C and 6 bar for 30 s, a flexible coating was obtained, with a thickness of 0.11 mm. This coating presented a grade 5 fastness to Veslic friction (ISO 11640: 2012) when dry and a grade ≥4 when wet; Martindale abrasion fastness (ISO 17704: 2004) classification D after 51200 revolutions, with a color change grade 2/3; grade 3 fastness to Crockmeter friction (ISO 20433: 2012) when wet and 5 when dry; light fastness (ISO 105-B02) grade 3.

In one embodiment, a coating paste containing 9.1% dry coffee grounds, with a particle size equal to or less than 0.2 mm, 84.1% aliphatic polyester-polyurethane-based coating aqueous polymer paste containing about 50% recycled content, and 6,8% of a blocked aliphatic poliisocyanate fastener was prepared, an acrylate-based thickener being added. This formulation formed clusters, making it impossible to apply them.

The term "comprises" or "comprising" when used herein is intended to indicate the presence of the features, elements, integers, steps and components mentioned, but does not preclude the presence or addition of one or more other features, elements, integers, steps and components, or groups thereof.

The present invention is of course in no way restricted to the embodiments described herein and a person of ordinary skill in the art can foresee many possibilities of modifying it depending on the requirements of each situation as defined in the appended claims.

The following claims define additional embodiments of the present description.

The embodiments presented are combinable with each other. The following claims define the invention.

## Claims

1. Flexible material comprised of
a textile substrate or a cellulose-based substrate selected from: knitted, woven, nonwoven fabrics, paper or combinations thereof;
wherein said textile substrate or a cellulose-based substrate comprises at least one coating layer;
wherein said coating layer comprises:
a polymer binder and,
at least 5% - 50% (wt_{residue}/wt_{coating}) particles of a residue,
wherein the residue particles have a particle size of less than 0.7 mm;
wherein the residue is of vegetable origin selected from a list comprised of: saw dust, leaf and stem residues, mushroom residues, paper residues, cereal residues, tea plant residues, coffee residues, rice husk, nut residues (in particular walnut, almond, chestnut, cashew, pine nut), tree bark (in particular pine and eucalyptus), olive stones, or mixtures thereof;
wherein said coating layer has a composition comprising
50% to 90% (wt_{residue}/wt_{coating}) of a suitable polymer binder, in particular natural or synthetic polymer binder, or combination thereof;
wherein the composition comprises a viscosity between 20 - 100 dPas at 20 °C; and wherein said coating layer is obtained by knife coating or rotary screen.

2. Material according to any of the preceding claims comprising at least 7% of residue particles (wt_{residue} / wt_{coating}), preferably at least 10% of residue particles (wt_{residue}/wt_{coating}).

3. Material according to any of the preceding claims, wherein the residue particles have a particle size between 0.001 - 0.7 mm, preferably 0.05 - 0.5 mm, more preferably the residue particles have a particle size between 0.1 - 0.3 mm.

4. Material according to any of the preceding claims, wherein 50% of the particles have a particle size of less than 0.5 mm, preferably 70% of the particles have a particle size of less than 0.7 mm, more preferably 90% of the particles have a particle size of less than 0.8 mm.

5. Material according to any of the preceding claims, wherein the polymer binder is selected from the following list: polyurethane, polyester, polyether, polyacrylate, polycarbonate, polyvinyl chloride, polyvinyl acetate, acrylic polyester, polystyrene, polyethylene, polyamide, waxes, paraffins, silicones, natural binders, or combinations thereof, preferably the polymer binder is selected from the following list: polyurethane, polyacrylate, polycarbonate or combinations thereof.

6. Material according to any of the preceding claims, wherein the coating layer further comprises an additive selected from the following list: crosslinker, thickener, softener, stabilizer, colorant, pigment, dispersant, anti-foamer, foamer, expander, emulsifier, anti-UV agent or combinations thereof.

7. Material according to any of the preceding claims, wherein the polymer binder and residue combination is selected from a list consisting of:
coffee residues, aliphatic polyester-polyurethane;
coffee residues, aliphatic polyether-polycarbonate urethane;
saw dust, aliphatic polyester-polyurethane;
saw dust, aliphatic polyether-polycarbonate urethane;
rice husk, aliphatic polyester-polyurethane;
pine bark, aliphatic polyacrylate-polyurethane;
pine bark; polyester-polyurethane;
or combinations thereof.

8. Material according to any of the preceding claims, wherein the textile substrate or the cellulose-based substrate comprises fibers selected from a list consisting of: cotton, linen, wool, regenerated cellulosics, polyester, elastane, or combinations thereof.

9. Material according to any of the preceding claims, wherein the coating layer comprises a thickness of 0.05 - 3 mm, preferably the coating layer comprises a thickness of 0.1 - 1.5 mm, more preferably 0.3 - 0.5 mm.

10. Material according to any of the preceding claims, wherein the material is obtained by thermosetting or UV setting, or combinations thereof.

11. Material according to any of the preceding claims comprising at least a second additional layer, in particular a lacquer layer, varnish layer, among others.

12. Composition for a coating of the textile substrate described in claims 1-12 comprising:
50% to 90% (wt_{binder}/wtₚₐₛₜₑ) of a suitable polymer binder, in particular of synthetic or natural origin or a combination thereof;
5% to 50% (wt_{residue}/wtₚₐₛₜₑ) of residue particles with a particle size of less than 1 mm, preferably less than 0.7 mm;
wherein the residue is of vegetable origin selected from a list comprised of: forest residues, cereal residues, agricultural residues, horticultural residues, silvicultural residues, paper residues, vegetable by-products excluding cork, or mixtures thereof;
wherein the composition comprises a viscosity between 20 - 100 dPas at 20 °C.

13. ttr Composition according to the preceding claim comprising a viscosity between 25 - 70 dPas at 20 °C, preferably between 40 - 55 dPas at 20 °C.

14. Composition according to any one of claims 13-14 comprising:
80% to 90% (wt_{binder}/wtₚₐₛₜₑ) of a polymer binder of synthetic or natural origin or suitable combination thereof;
8% to 10% (wt_{residue}/wtₚₐₛₜₑ) of residue particles with a particle size of less than 1 mm.

15. Article comprising the material and/or the composition described in any of the preceding claims, in particular the article is an article for clothing, article for application in furniture, article for home textile or decoration, footwear, automobile upholstery, bags, wallets, belts, leather goods, among others.

16. Method for obtaining the flexible material described in any one of claims 1-15 comprising the following steps:
selecting residue particles with a particle size of less than 1 mm, wherein the residue is of vegetable origin selected from a list comprised of: forest residues, cereal residues, agricultural residues, horticultural residues, silvicultural residues, paper residues, vegetable by-products excluding cork, or mixtures thereof;
mixing at least 5% of residue particles (wt_{residue}/wt_{coating}) with a polymer binder in order to obtain a paste having a viscosity between 20 - 100 dPas at 20 °C;
optionally, incorporating air into the paste, this including a foamer, so as to obtain a coating foam;
applying, by knife coating or rotary screen, at least one layer of the paste or foam obtained onto a textile substrate or a cellulose-based substrate selected from:
knitted, woven, nonwoven fabrics, paper or combinations thereof;
optionally drying, thermosetting and/or calendering the coating, the thermosetting and calendering being carried out in different orders.

## Patentansprüche

1. Flexibles Material, umfassend
ein textiles Substrat oder ein Substrat auf Zellulosebasis, ausgewählt aus: Gewirken, Geweben, Vliesstoffen, Papier oder Kombinationen davon;
wobei das genannte textile Substrat oder ein Substrat auf Zellulosebasis mindestens eine Überzugsschicht umfasst;
wobei die genannte Überzugsschicht umfasst:
ein polymeres Bindemittel und,
mindestens 5 % - 50 % (wt_{Rückstand}/wt_{Überzug}) Partikel eines Rückstands, wobei die Rückstandspartikel eine Partikelgröße von weniger als 0,7 mm haben;
wobei der Rückstand pflanzlichen Ursprungs ist, ausgewählt aus einer Liste, umfassend: Sägemehl, Blatt- und Stielrückstände, Pilzrückstände, Papierrückstände, Getreiderückstände, Teepflanzenrückstände, Kaffeerückstände, Reishülsen, Nussrückstände (insbesondere Walnuss, Mandel, Kastanie, Cashew, Pinienkern), Baumrinde (insbesondere Kiefer und Eukalyptus), Olivenkerne oder Mischungen davon;
wobei die genannte Überzugsschicht eine Zusammensetzung aufweist, umfassend 50% bis 90% (wt_{Rückstand}/wt_{Überzug}) eines geeigneten polymeren Bindemittels, insbesondere eines natürlichen oder synthetischen polymeren Bindemittels, oder einer Kombination davon;
wobei die Zusammensetzung eine Viskosität zwischen 20 - 100 dPas bei 20 °C aufweist; und wobei die genannte Überzugsschicht durch Rakeln oder mittels Rotationssieb erhalten wird.

2. Material nach einem der vorangehenden Ansprüche, das mindestens 7% Rückstandspartikel (wt_{Rückstand}/wt_{Überzug}), bevorzugt mindestens 10% Rückstandspartikel (wt_{Rückstand/}wt_{Überzug}) umfasst.

3. Material nach einem der vorangehenden Ansprüche, wobei die Rückstandspartikel eine Partikelgröße zwischen 0,001 - 0,7 mm, bevorzugt 0,05 - 0,5 mm, die Rückstandspartikel besonders bevorzugt eine Partikelgröße zwischen 0,1 - 0,3 mm aufweisen.

4. Material nach einem der vorangehenden Ansprüche, wobei 50% der Partikel eine Partikelgröße von weniger als 0,5 mm, bevorzugt 70 % der Partikel eine Partikelgröße von weniger als 0,7 mm, besonders bevorzugt 90 % der Partikel eine Partikelgröße von weniger als 0,8 mm aufweisen.

5. Material nach einem der vorangehenden Ansprüche, wobei das polymere Bindemittel aus der folgenden Liste ausgewählt wird: Polyurethan, Polyester, Polyether, Polyacrylat, Polycarbonat, Polyvinylchlorid, Polyvinylacetat, Acrylpolyester, Polystyrol, Polyethylen, Polyamid, Wachse, Paraffine, Silikone, natürliche Bindemittel oder Kombinationen davon, wobei das polymere Bindemittel bevorzugt aus der folgenden Liste ausgewählt wird: Polyurethan, Polyacrylat, Polycarbonat oder Kombinationen davon.

6. Material nach einem der vorangehenden Ansprüche, wobei die Überzugsschicht ferner ein Additiv umfasst, das aus der folgenden Liste ausgewählt wird: Vernetzungsmittel, Verdickungsmittel, Weichmacher, Stabilisator, Farbstoff, Pigment, Dispergiermittel, Entschäumer, Schaumbildner, Füllstoff, Emulgator, Lichtschutzmittel oder Kombinationen davon.

7. Material nach einem der vorangehenden Ansprüche, wobei die Kombination aus polymerem Bindemittel und Rückstand aus einer Liste ausgewählt wird, umfassend:
Kaffeerückstände, aliphatisches Polyester-Polyurethan;
Kaffeerückstände, aliphatisches Polyether-Polycarbonat Urethan;
Sägemehl, aliphatisches Polyester-Polyurethan;
Sägemehl, aliphatisches Polyether-Polycarbonat Urethan;
Reishülsen, aliphatisches Polyester-Polyurethan;
Kiefernrinde, aliphatisches Polyacrylat-Polyurethan;
Kiefernrinde; Polyester-Polyurethan;
oder Kombinationen davon.

8. Material nach einem der vorangehenden Ansprüche, wobei das textile Substrat oder das Substrat auf Zellulosebasis Fasern umfasst, ausgewählt aus einer Liste, umfassend: Baumwolle, Leinen, Wolle, regenerierte Zellulose, Polyester, Elastan oder Kombinationen davon.

9. Material nach einem der vorangehenden Ansprüche, wobei die Überzugsschicht eine Stärke von 0,05 - 3 mm aufweist, die Überzugsschicht bevorzugt eine Stärke von 0,1 - 1,5 mm aufweist, besonders bevorzugt 0,3 - 0,5 mm aufweist.

10. Material nach einem der vorangehenden Ansprüche, wobei das Material durch Thermofixierung oder UV-Härtung oder Kombinationen davon erhalten wird.

11. Material nach einem der vorangehenden Ansprüche, umfassend mindestens eine zweite zusätzliche Schicht, insbesondere eine Lackschicht, Firnisschicht oder dergleichen.

12. Zusammensetzung für einen Überzug des in den Ansprüchen 1-12 beschriebenen textilen Substrats, umfassend:
50% bis 90% (wt_{Bindemittel}/wt_{Paste}) eines geeigneten polymeren Bindemittels, insbesondere synthetischen oder natürlichen Ursprungs oder einer Kombination davon;
5% bis 50% (wt_{Rückstand/}wt_{Paste}) an Rückstandspartikeln mit einer Partikelgröße von weniger als 1 mm, bevorzugt weniger als 0,7 mm;
wobei der Rückstand pflanzlichen Ursprungs ist, ausgewählt aus einer Liste, umfassend: Waldrestholz, Getreiderückstände, landwirtschaftliche Rückstände, gartenbauliche Rückstände, Forstrückstände, Papierrückstände, pflanzliche Nebenprodukte, ausgenommen Kork, oder Mischungen davon;
wobei die Zusammensetzung eine Viskosität zwischen 20 - 100 dPas bei 20 °C aufweist.

13. Zusammensetzung nach dem vorangehenden Anspruch mit einer Viskosität zwischen 25 - 70 dPas bei 20 °C, bevorzugt zwischen 40 - 55 dPas bei 20 °C.

14. Zusammensetzung nach einem der Ansprüche 13-14, umfassend:
80% bis 90 % (wt_{Bindemittel}/wt_{Paste}) eines polymeren Bindemittels synthetischen oder natürlichen Ursprungs oder einer geeigneten Kombination davon;
8% bis 10% (wt_{Rückstand}/wt_{Paste}) an Rückstandspartikeln mit einer Partikelgröße von weniger als 1 mm.

15. Gegenstand, umfassend das in einem der vorhergehenden Ansprüche beschriebene Material und/oder die dort beschriebene Zusammensetzung, insbesondere in einem Gegenstand für ein Bekleidungsstück, ein Gegenstand zur Verwendung in Möbeln, ein Gegenstand für Heimtextilien oder zur Dekoration, Schuhe, Autopolster, Taschen, Brieftaschen, Gürtel, Lederwaren und dergleichen.

16. Verfahren zur Herstellung des in einem der Ansprüche 1-15 beschriebenen flexiblen Materials, die folgenden Schritte umfassend:
Auswahl von Rückstandspartikeln mit einer Partikelgröße von weniger als 1 mm, wobei der Rückstand pflanzlichen Ursprungs ist, ausgewählt aus einer Liste, umfassend:
Waldrestholz, Getreiderückstände, landwirtschaftliche Rückstände, gartenbauliche Rückstände, Forstrückstände, Papierrückstände, pflanzliche Nebenprodukte, ausgenommen Kork, oder Mischungen davon;
Mischen von mindestens 5 % Rückstandspartikeln (wt_{Rückstand}/wt_{Überzug}) mit einem polymeren Bindemittel, um eine Paste mit einer Viskosität zwischen 20 - 100 dPas bei 20 °C zu erhalten;
gegebenenfalls Einbringen von Luft in die Paste, einschließlich eines Schaumbildners, um einen Schaumüberzug zu erhalten;
Auftragen durch Rakeln oder mittels Rotationssieb von mindestens einer Schicht der erhaltenen Paste oder des Schaums auf ein textiles Substrat oder ein Substrat auf Zellulosebasis, ausgewählt aus: Gewirken, Geweben, Vliesstoffen, Papier oder Kombinationen davon;
gegebenenfalls Trocknen, Thermofixieren und/oder Kalandrieren des Überzugs, wobei das Thermofixieren und das Kalandrieren in unterschiedlicher Reihenfolge erfolgt.

## Revendications

1. Matière souple composée
d'un substrat textile ou d'un substrat à base de cellulose choisi parmi : tissus tricotés, tissés, non tissés, papier ou des combinaisons de ceux-ci ;
dans laquelle ledit substrat textile ou substrat à base de cellulose comprend au moins une couche de revêtement ;
dans laquelle ladite couche de revêtement comprend :
un liant polymère et,
au moins 5% à 50% (poids_{résidu}/poids_{revêtement}) de particules d'un résidu,
dans laquelle les particules de résidu ont une taille de particule inférieure à 0,7mm ;
dans laquelle le résidu est d'origine végétale choisie parmi une liste composée de: sciure, résidus de feuille et de tige, résidus de champignon, résidus de papier, résidus de céréales, résidus de théier, résidus de café, balle de riz, résidus de fruits secs (en particulier noix, amande, châtaigne, cajou, pignon), écorce d'arbre (en particulier pin et eucalyptus), noyaux d'olive, ou des mélanges de ceux-ci ;
dans laquelle ladite couche de revêtement a une composition comprenant
50% à 90% (poids_{résidu}/poids_{revêtement}) d'un liant polymère adapté, en particulier un liant polymère naturel ou synthétique, ou une combinaison de ceux-ci ;
dans laquelle la composition comprend une viscosité située entre 20dPas et 100 dPas à 20°C ;
et dans laquelle ladite couche de revêtement est obtenue par enduction à la râcle ou cadre rotatif.

2. Matière selon l'une quelconque des revendications précédentes comprenant au moins 7% de particules de résidu (poids_{résidu}/poids_{revêtement}), préférablement au moins 10% de particules de résidu (poids_{résidu}/poids_{revêtement}).

3. Matière selon l'une quelconque des revendications précédentes, dans laquelle les particules de résidu ont une taille de particule située entre 0,001mm et 0,7mm, préférablement entre 0,05mm et 0,5mm, les particules de résidu ayant plus préférablement une taille de particule située entre 0,1mm et 0,3mm.

4. Matière selon l'une quelconque des revendications précédentes, dans laquelle 50% des particules ont une taille de particule inférieure à 0,5mm, 70% des particules ayant préférablement une taille de particule inférieure à 0,7mm, 90% des particules ayant plus préférablement une taille de particule inférieure à 0,8mm.

5. Matière selon l'une quelconque des revendications précédentes, dans laquelle le liant polymère est choisi parmi la liste suivante : polyuréthane, polyester, polyéther, polyacrylate, polycarbonate, chlorure de polyvinyle, acétate de polyvinyle, polyester acrylique, polystyrène, polyéthylène, polyamide, cires, paraffines, silicones, liants naturels, ou des combinaisons de ceux-ci, le liant polymère étant préférablement choisi parmi la liste suivante : polyuréthane, polyacrylate, polycarbonate ou des combinaisons de ceux-ci.

6. Matière selon l'une quelconque des revendications précédentes, dans laquelle la couche de revêtement comprend également un additif choisi parmi la liste suivante : agent de réticulation, épaississant, adoucissant, stabilisateur, colorant, pigment, dispersant, anti-mousse, mousseur, élargisseur, émulsifiant, agent anti-UV ou des combinaisons de ceux-ci.

7. Matière selon l'une quelconque des revendications précédentes, dans laquelle le liant polymère et la combinaison de résidus sont choisis parmi une liste consistant en :
résidus de café, polyester-polyuréthane aliphatique ;
résidus de café, polyéther-polycarbonate d'uréthane aliphatique ;
sciure, polyester-polyuréthane aliphatique ;
sciure, polyéther-polycarbonate d'uréthane aliphatique ;
balle de riz, polyester-polyuréthane aliphatique ;
écorce de pin, polyacrylate-polyuréthane aliphatique ;
écorce de pin ; polyester-polyuréthane ;
ou des combinaisons de ceux-ci.

8. Matière selon l'une quelconque des revendications précédentes, dans laquelle le substrat textile ou le substrat à base de cellulose comprend des fibres choisies parmi une liste consistant en : coton, lin, laine, cellulosiques régénérés, polyester, élasthanne, ou des combinaisons de ceux-ci.

9. Matière selon l'une quelconque des revendications précédentes, dans laquelle la couche de revêtement comprend une épaisseur de 0,05mm à 3mm, la couche de revêtement comprenant préférablement une épaisseur de 0,1mm à 1,5mm, plus préférablement de 0,3mm à 0,5mm.

10. Matière selon l'une quelconque des revendications précédentes, dans laquelle la matière est obtenue par thermodurcissement ou par durcissement aux UV, ou des combinaisons de ceux-ci.

11. Matière selon l'une quelconque des revendications précédentes comprenant au moins une seconde couche supplémentaire, en particulier une couche de laque, une couche de vernis, entre autres.

12. Composition pour un revêtement du substrat textile décrit dans les revendications 1-12 comprenant :
50% à 90% (poids_{liant/}poids_{pâte}) d'un liant polymère adapté, en particulier d'origine synthétique ou naturelle ou une combinaison de ceux-ci ;
5% à 50% (poids_{résidu}/poids_{pâte}) de particules de résidu avec une taille de particule inférieure à 1mm, préférablement inférieure à 0,7mm ;
dans lequel le résidu est d'origine végétale choisie parmi une liste composée de:
résidus forestiers, résidus de céréales, résidus agricoles, résidus horticoles, résidus sylvicoles, résidus de papier, sous-produits végétaux sauf l'écorce, ou des mélanges de ceux-ci ;
dans lequel la composition comprend une viscosité située entre 20dPas et 100dPas à 20°C.

13. Composition selon la revendication précédente comprenant une viscosité située entre 25dPas et 70dPAs à 20°C, préférablement entre 40dPas et 55dPas à 20°C.

14. Composition selon l'une quelconque des revendications 13-14 comprenant :
80% à 90% (poidsₗᵢₐₙₜ/poids_{pâte}) d'un liant polymère d'origine synthétique ou naturelle ou une combinaison adaptée de ceux-ci ;
8% à 10% (poids_{résidu}/poids_{pâte}) de particules de résidu avec une taille de particule inférieure à 1mm.

15. Article comprenant la matière et/ou la composition décrite dans l'une quelconque des revendications précédentes, l'article étant en particulier un article pour des vêtements, un article destiné à être appliqué dans du mobilier, un article pour de la literie ou de la décoration, des chaussures, des tissus automobiles, des sacs, des ceintures, de la maroquinerie, entre autres.

16. Procédé d'obtention de la matière souple décrite dans l'une quelconque des revendications 1-15 comprenant les étapes suivantes :
sélectionner des particules de résidu avec une taille de particule inférieure à 1 mm, dans laquelle le résidu est d'origine végétale choisie parmi une liste composée de : résidus forestiers, résidus de céréales, résidus agricoles, résidus horticoles, résidus sylvicoles, résidus de papier, sous-produits végétaux sauf l'écorce, ou des mélanges de ceux-ci ;
mélanger au moins 5% de particules de résidus (poids_{résidu}/poids_{revêtement}) avec un liant polymère afin d'obtenir une pâte ayant une viscosité située entre 20dPas et 100dPas à 20°C ;
facultativement, incorporer de l'air à la pâte, ce qui inclut un mousseur, afin d'obtenir une mousse de revêtement ;
appliquer, par enduction à la râcle ou cadre rotatif, au moins une couche de la pâte ou mousse obtenue sur un substrat textile ou un substrat à base de cellulose choisi parmi :
tissus tricotés, tissés, non tissés, papier ou des combinaisons de ceux-ci ;
facultativement, sécher, thermodurcir et/ou calandrer le revêtement, le thermodurcissement et le calandrage étant effectués dans différents ordres.
